# EUROPÄISCHE PATENTSCHRIFT

(11) **EP 1 096 635 B1**
(45) Veröffentlichungstag und Bekanntmachung des Hinweises auf die Patenterteilung: **30.11.2005**
(21) Anmeldenummer: 00120512.9
(22) Anmeldetag: 20.09.2000
(51) Int. Cl.: H02J 7/00, F24D 19/10, G05D 23/19

(54) **Regelverfahren und Regler für elektrisch betriebene Stelleinrichtungen**
Control method and regulator for electric driven actuators
Procédé de régulation et régulateur pour actionneurs à commande électrique

(30) Priorität: 29.10.1999 DE 19952165
(43) Veröffentlichungstag der Anmeldung: 02.05.2001
(73) Patentinhaber: Techem Energy Services GmbH, 65760 Eschborn (DE)
(72) Erfinder: Ohl, Jochen, Dr., 64823 Gross-Umstadt (DE)
(74) Vertreter: KEIL & SCHAAFHAUSEN Patentanwälte

(56) Entgegenhaltungen:
- DE-A- 3 130 591
- DE-A- 3 335 226
- DE-A- 4 331 142
- DE-A- 19 754 837
- US-A- 5 032 992

## Beschreibung

Die Erfindung betrifft ein Regelverfahren und einen Regler für elektrisch betriebene Stelleinrichtungen mit Ladungsspeicher.

Zur Regelung der Raumtemperatur werden Heizkörperregler, bspw. in Form von Thermostatventilen eingesetzt. Neben diesen Reglern ohne Hilfsenergie mit manueller Sollwerteinstellung werden zunehmend Regeleinrichtungen mit Hilfsenergie verwendet, bspw. elektromotorisch betriebene Stelleinrichtungen. Die Spannungsversorgung kann über eine Versorgungsleitung oder über Batterien erfolgen. Hierdurch ist es möglich, bestimmte Temperaturprofile in Abhängigkeit der Zeit vorzugeben, denen der Temperaturregler automatisch folgt. So kann eine Nachtabsenkung des betreffenden Heizkörpers erreicht werden, ohne dass der Benutzer selbst manuelle Einstellungen an dem Regler vornehmen muß. In modernen Temperaturreglern ist auch eine Fenster-Offen-Erkennung integriert, die ein selbständiges Schließen des Ventils bei einer erkannten Fensterlüftung bewirkt, um die Lüftungswärmeverluste zu reduzieren.

Als Regler werden häufig sogenannte PI-Regelungen mit einem proportionalen und einem integralen Regelanteil eingesetzt. Diese Regelungen berechnen aus einer erkannten Differenz zwischen Temperatur-Ist- und -Sollwert, einen Sollstellweg für das Öffnen bzw. Schließen des Heizkörperventils. Die Energieversorung erfolgt insbesondere bei kleinen Geräten ohne eigenen Stromanschluss, wie bspw. Einzelraumtemperaturreglern an Heizkörpern, durch Batterien. Es hat sich jedoch herausgestellt, dass bei derartigen elektrisch betriebenen Einzeltemperaturreglern die Lebensdauer der Batterien aufgrund des relativ hohen Stomverbrauchs oft erheblich unter der für das Gerät typischen Batterielebensdauer liegt, so dass ein häufiger Batteriewechsel notwendig ist, bzw. keine automatische Regelung mehr erfolgt.

Die 197 54 837 A1 beschreibt einen Thermostataufsatz für ein Thermostatventil, bei dem der Sollwert für die Thermostatregelung elektromotorisch durch einen batteriebetriebenen Motor eingestellt wird, der über einen Signalgeber zur Vorgabe des Sollwertes angesteuert wird. Die Regelung der Temperatur erfolgt durch ein Thermostatelement, das seine axiale Länge in Abhängigkeit vom Istwert der Raumtemperatur ändert und auf einen Ventilstößel einwirkt. Zur Überwachung des Ladungszüstands der Batterie ist als Ladungswächter eine Spannungsmessung vorgesehen. Wird ein Ladungsgrenzwert unterschritten, wird dies als Störsignal in einem Display angezeigt und dafür gesorgt, dass die Sollwertvorgabe in eine vorgegebene Ruhestellung gebracht wird.

In der DE 31 30 591 A1 wird eine Schaltungsanordnung zum Erfassen und Anzeigen der von einem Heizkörper abgegebenen Wärmemenge offenbart. Die dafür vorgesehene Schaltung kann im Standby-Betrieb arbeiten, um bei Batteriebetrieb die Lebensdauer der Batterie zu erhöhen.

Aufgabe der Erfindung ist es-, bei einer elektrisch betriebenen Stelleinrichtung die Lebensdauer der Ladungsspeicher zu verlängern.

Diese Aufgabe wird erfindungsgemäß im wesentlichen dadurch gelöst, dass der Stelleinrichtung auf der Basis der Ladekapazität des Ladungsspeichers eine pro Zeiteinheit, bspw. Tag, zur Verfügung stehende Ladungsmenge zugeordnet wird, dass der Ladungsverbrauch der Stelleinrichtung überwacht wird und dass die Stellbewegungen der Stelleinrichtung eingeschränkt werden, wenn die tatsächlich verbrauchte Ladungsmenge die für die Zeiteinheit zur Verfügung stehende Ladungsmenge übersteigt.

Durch die Einschränkung der Stellbewegungen der Stelleinrichtung tendiert die Regelung zu einem trägeren Verhalten und die Zeitkonstante der Regelung wird vergrößert, so dass sich das Erreichen des Sollwertes verzögert. Da die meisten Regelungen den Istwert einem Sollwert asymptotisch anpassen, d.h. den Istwert zunächst schnell in die Nähe des Sollwertes führen und anschließend langsam (asymptotisch) angleichen, wird im wesentlichen nur der langsame Angleich verzögert. Diese Verzögerung wird bei einer Temperaturregelung von dem Benutzer kaum wahrgenommen und führt zu keinen erheblichen zusätzlichen Wärmeverlusten. Aufgrund der Reduzierung des Ladungsverbrauchs durch die Einschränkung der Stellbewegungen kann dennoch eine erhebliche Verlängerung der Lebensdauer des Ladungsspeichers erreicht werden. Die pro Zeiteinheit zur Verfügung stehende Ladungsmenge ergibt sich hierbei aus der Gesamtkapazität des Ladungsspeichers und der angestrebten Gesamtlebensdauer. Neben der Verlängerung der Lebensdauer der Ladungsspeicher wird somit zusätzlich erreicht, dass deren Gesamtlebensdauer relativ genau vorgeplant werden kann, ohne entscheidende Funktionseinschränkungen der Regelung in Kauf nehmen zu müssen.

Gemäß einer bevorzugten Ausgestaltung der Erfindung kann zur Überwachung des Ladungsverbrauches ein sogenannter logischer Kondensator eingesetzt werden, in dem die zum durchschnittlichen Verbrauch vorgesehene Ladungsmenge einmal pro Zeiteinheit, bspw. einmal pro Tag, auf einen fortlaufenden Zähler aufaddiert und die tatsächlich verbrauchte Ladungsmenge von dem Zähler subtrahiert wird. Ist die tatsächlich verbrauchte Ladungsmenge geringer als die zur Verfügung stehende Ladungsmenge, so wird der Zählerstand zunehmen. Ist dagegen die tatsächlich verbrauchte Ladung größer als die zu Verfügung stehende Ladung, so wird der Zählerstand abnehmen. Durch diesen Zähler wird die in einem Zeitraum mit geringer Regelungsaktivität eingesparte Ladungsmenge aufsummiert, so dass sie in Zeiten mit größeren Stellaktivitäten aufgebraucht werden kann. So werden bei einer Temperaturregelung im Sommer üblicherweise nur wenige Stellbewegungen durchgeführt, während im Winter ein erhöhter Regelungsbedarf besteht.

In einer anderen, vereinfachten Ausführungsform der Erfindung wird zur Überwachung des Ladungsverbrauches die in einer Zeiteinheit tatsächlich verbrauchte Ladungsmenge von der pro Zeiteinheit zum Verbrauch vorgesehenen Ladungsmenge subtrahiert. Beim Unterschreiten eines Schwellwertes, bspw. bei einer negativen Differenz, werden dann die Stellbewegungen der Stelleinrichtung eingeschränkt, um den Ladungsverbrauch zu reduzieren. Anderenfalls werden alle Stellbewegungen ausgeführt, um einen optimalen Regelungsverlauf zu erhalten.

Eine Einschränkung der Stellbewegungen zur Verminderung des Ladungsverbrauches kann erfindungsgemäß besonders wirksam durch eine Begrenzung des maximalen Stellweges der Stelleinrichtung erreicht werden. Dadurch wird die Laufzeit des Stellantriebs während der Stellbewegung nach oben begrenzt, was sich insbesondere beim Auf- und Zufahren der Ventile auswirkt. Bei einem Einzelraumtemperaturregler bewirkt ein vollständig geöffnetes Ventil im Vergleich zu einem nur halb geöffneten Ventil keine deutliche Erhöhung des Massenstroms, so dass die Einsparung des Ladungsverbrauchs ohne wesentliche Beeinträchtigung des Heizverhaltens durchgeführt werden kann.

Die Einschränkung der Stellbewegungen kann aber auch durch eine Verkleinerung des von der Regelung nutzbaren Stellweges und/oder eine Vergrößerung des Mindeststellweges, ab dem eine Stellbewegung durchgeführt wird, erreicht werden. Die relative Verkleinerung des Sollstellweges führt dazu, dass der Istwert langsamer an den Sollwert herangeführt wird. Dies verhindert eine Überregelung, die wiederum ein Gegenregeln mit neuen Stellbewegungen verursachen würde. Bei einer Vergrößerung des Grenzwertes für das Auslösen einer Stellbewegung toleriert die Regelung größere Abweichungen vom Sollwert, bevor sie aktiv wird. Dadurch wird ein häufiges Nachregeln mit entsprechend kleinen Stellbewegungen verhindert. Die Ladungseinsparung ist hier besonders groß, da der Stromverbrauch zu Beginn der Stellbewegung, bspw. beim Anlaufen des Stellmotors, relativ hoch ist.

Außerdem kann die Stellbewegung durch Anpassen der Nachstellzeit der Regelung, der Regelverstärkung und/oder dergleichen Parameter eingeschränkt werden. Hierbei wird bspw. durch Veränderung der proportionalen und/oder integralen Regelungsparameter einer PI-Regelung das dynamische Verhalten der Regelung verändert.

In Weiterbildung der Erfindung werden die Parameter zur Steuerung der Stellbewegung, wie maximaler Stellweg, Sollstellweg, Mindeststellweg, Nachstellzeit, Regelverstärkung und dgl., mit einem aus der zur Verfügung stehenden Ladungsmenge abgeleiteten Bewertungsfaktor gewichtet. So wird das Regelverhalten kontinuierlich an den Ladungszustand des Ladungsspeichers angepasst und unterschiedliche Abstufungen in der Einschränkung der Stellbewegungen werden ermöglicht. Bspw. kann bei einer Fensterlüftung das Ventil des Einzelraumtemperaturreglers vollständig schließen, wenn der Bewertungsfaktor einen vollen Ladungsspeicher anzeigt. Bei einem verminderten Ladungszustand wird das Ventil nicht mehr vollständig schließen, sondern eine Zwischenstellung zwischen der aktuellen Position und dem Schließpunkt anfahren. Ist dagegen ein kritischer Ladungszustand unterschritten, wird der momentane Ventilstand eingefroren und die Regelung reagiert überhaupt nicht mehr.

Erfindungsgemäß wird der vorzugsweise zwischen 0 und 1 liegende Bewertungsfaktor in dem logischen Kondensator mit einer Berechnungsvorschrift aus dem Zählerstand gebildet. Auf diese Weise kann der Bewertungfaktor optimal an die Regelalgorithmen angepasst werden. Je kleiner der Bewertungsfaktor ist, desto träger verhält sich die Regelung.

Die Aufgabe wird bei einem Regler für elektrisch betriebene Stelleinrichtungen mit einem Stellantrieb, einer Regelung zur Steuerung des Stellantriebs und einem Ladungsspeicher im wesentlichen dadurch gelöst, dass der Regler einen Ladungszähler zur Überwachung der verbrauchten Ladungsmenge, eine Speichereinheit zum Speichern des Wertes der zur Verfügung stehenden Ladungsmenge, des Wertes der verbrauchten Ladungsmenge und/oder eines Bewertungsfaktors sowie eine Recheneinheit zur Bestimmung der zur Verfügung stehenden Ladungmenge und ggf. des Bewertungsfaktors aufweist.

Bei einer besonders vorteilhaften Ausführungsform sind die Speichereinheit und die Recheneinheit als logischer Kondensator mit einem fortlaufenden Zähler zur Addition der pro Zeitintervall zur Verfügung stehenden Ladungsmenge und zur Subtraktion der tatsächlich verbrauchten Ladungsmenge ausgebildet. Nicht verbrauchte zur Verfügung stehende Ladung wird aufsummiert und kann bei einer erhöhten Stellaktivität später aufgebraucht werden.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: ein schematisches Verlaufsdiagramm für die erfindungsgemäße Regelung einer Stellbewegung und
- Fig. 2: schematisch den Aufbau eines erfindungsgemäßen Reglers.

Nachfolgend wird das Regelverfahren beispielhaft anhand eines elektromotorisch betriebenen Heizkörperreglers beschrieben, dessen Energieversorgung mittels Batterien oder Akkumulatoren erfolgt. Das Verfahren ist jedoch nicht auf derartige Regler beschränkt, sondern eignet sich gleichermaßen für alle elektrisch betriebenen Stelleinrichtungen mit Ladungsspeicher.

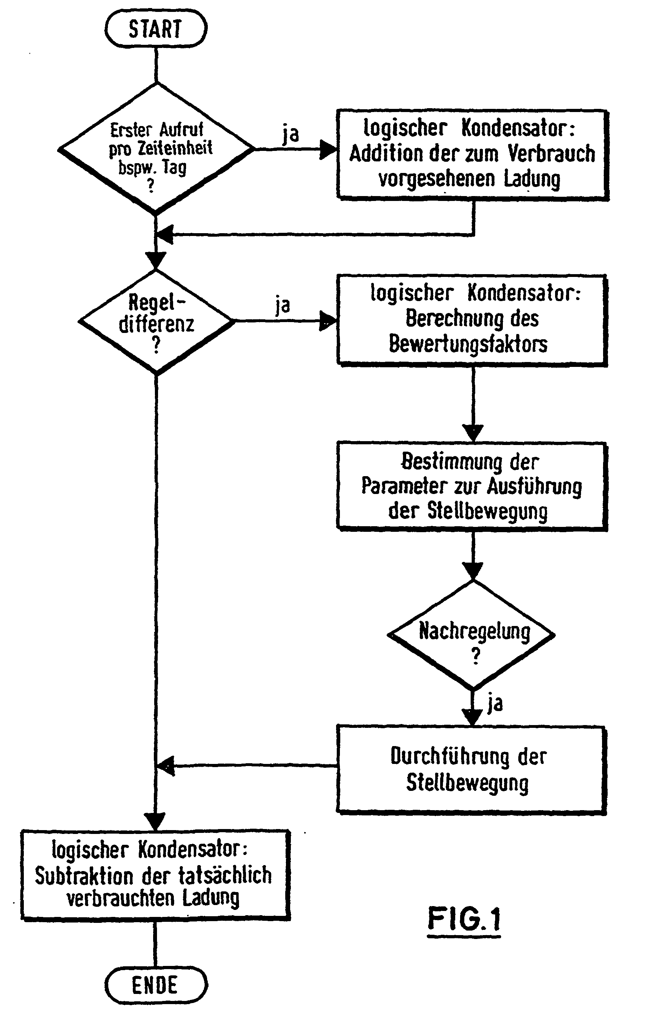

Bei einem Heizkörperregler wird in regelmäßigen, ggf. von der Regelung beeinflussbaren Zeitabständen eine Temperaturmessung zur Bestimmung des Istwertes der Raumtemperatur durchgeführt. Anschließend wird das in Fig. 1 dargestellte Regelverfahren aufgerufen.

Nach dem Aufruf wird zunächst abgefragt, ob dies der erste Aufruf innerhalb einer bestimmten Zeiteinheit ist. Beim ersten Aufruf wird einem in einem logischen Kondensator ausgebildeten fortlaufenden Zähler die zum Verbrauch in der Zeiteinheit vorgesehene Ladungsmenge hinzuaddiert. Diese ergibt sich aus der Gesamtbatteriekapazität der im Heizkörperregler angeordneten Batterien und der gewünschten Gesamtlebensdauer der Ladungsspeicher. Danach steht im fortlaufenden Zähler die Ladungsmenge zur Verfügung, die in der vorgegebenen Zeiteinheit verbraucht werden kann. Bei Heizkörperreglern hat sich ein Tag als sinnvolle Zeiteinheit erwiesen.

Anschließend wird abgefragt, ob zwischen dem gemessenen Temperatur-Istwert und dem vorgegebenen Temperatur-Sollwert eine Differenz besteht, die nachgeregelt werden muss. Wenn keine Differenz zwischen Istwert und Sollwert besteht, wird das Regelverfahren nach der Erfassung der seit dem letzten Energievergleich verbrauchten Ladungsmenge beendet und nach der nächten Temperaturmessung erneut aufgerufen.

Andernfalls wird der Regelvorgang eingeleitet und in dem logischen Kondensator zunächst ein Bewertungsfaktor berechnet, der Auskunft über die zur Verfügung stehende Energie gibt. Dazu wird der Zählerstand des fortlaufenden Zählers abgefragt. Solange der Zählerstand positiv ist, d.h., dass die tätsächlich verbrauchte Ladungsmenge geringer ist als die zur Verfügung stehende Ladungsmenge, so wird der Bewertungsfaktor bspw. auf 1 gesetzt. Bei einem negativen Zählerstand wird der Bewertungsfaktor gemäß einer vorgegebenen Berechungsvorschrift verkleinert, bis er minimal den Wert 0 erreicht. Ein Bewertungsfaktor <1 zeigt an, dass bis zum jetzigen Zeitpunkt bereits mehr Energie verbraucht wurde als vorgesehen ist, um die angestrebte Gesamtlebensdauer der Batterie zu erreichen. Selbstverständlich ist es möglich, den Bewertungsfaktor bei entsprechender Auslegung der Gleichungen für die Regelparameter auch anders festzulegen. So kann der Bewertungsfaktor auch zwischen 0 und 2,0 und 50 oder auch -1 und 1 festgelegt werden.

Auf Grundlage des von dem logischen Kondensator ermittelten Bewertungsfaktors werden anschließend die Parameter für die Ventilpositionsänderung bestimmt. Dazu werden die maximale Ventilöffung, der Sollstellweg, der Mindeststellweg, die Nachstellzeit und/oder die Regelverstärkung nach Funktionen berechnet, in die der Bewertungsfaktor eingeht. Dadurch wird erreicht, dass das Verhalten des Reglers zu einem um so trägeren Verhalten tendiert, je kleiner der Bewertungsfaktor ist.

Anschließend wird anhand von voreingestellten Vorgaben abgefragt, ob die Bedingungen für eine Nachregelung erfüllt sind. Diese Bedingungen können ihrerseits von dem Bewertungsfaktor, d.h. dem Ladungszustand der Batterien, abhängen oder davon unabhängig sein. Wenn die Bedingungen erfüllt sind, wird die Stellbewegung von dem elektrisch angetriebenen Stellmotor durchgeführt.

Abschließend wird vor Beendigung des Regelvorgangs unabhängig davon, ob eine Stellbewegung stattgefunden hat oder nicht, die tatsächlich verbrauchte Ladungsmenge von dem Zähler im logischen Kondensator subtrahiert, um die Energiebilanz zu aktualisieren. Die tatsächlich verbrauchte Ladungsmenge ergibt sich dabei insbesondere aus den Motorbewegungen bei der Stellbewegung, die durch geändertes Regelverhalten beeinflusst werden können, sowie aus µC-Aktivitäten, Temperaturmessungen und ggf. Funkaktivitäten zu einer Wohnungszentrale, die nicht beeinflusst werden können.

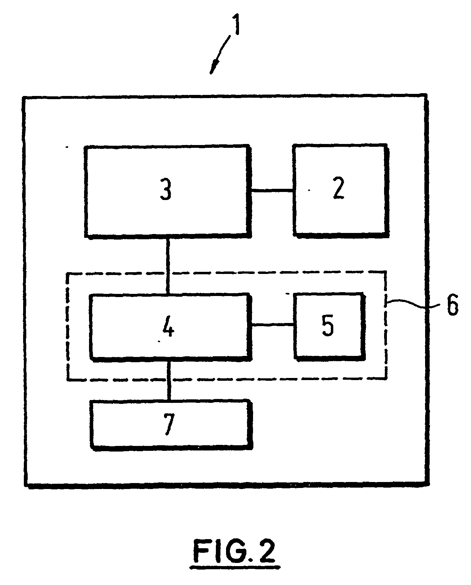

Wie in Fig. 2 gezeigt, weist ein Regler 1 zur Durchführung des oben beschriebenen Regelverfahrens einen Stellantrieb 2 für die Stellbewegungen und eine Regelung 3 mit einem Ladungsspeicher zur Steuerung des Stellantriebs 2 auf. Zusätzlich ist eine mit der Regelung 3 verbundene Speichereinheit 4 vorgesehen, die zusammen mit einer Recheneinheit 5 zu einem logischen Kondensator 6 zusammengefasst ist. In dem logischen Kondensator 6 wirken Speichereinheit 4 und Recheneinheit 5 so zusammen, dass die zum durchschnittlichen Verbrauch vorgesehene Ladungsmenge einmal pro Tag auf einen fortlaufenden Zähler aufaddiert und die tatsächlich verbrauchte Ladungsmenge von diesem Zähler subtrahiert wird. Der Zählerstand steht als Speicherwert ebenso zur Verfügung wie ein aus dem Zählerstand berechneter Bewertungsfaktor. Mit dem logischen Kondensator 6 ist ein Ladungszähler 7 verbunden, der die durch µC-Aktivitäten, Temperaturmessungen, Funkaktivitäten und Motorbewegungen tatsächlich verbrauchte Ladungsmenge misst.

Mit der Erfindung wird die Möglichkeit zu einer sparsamen, automatischen Verbrauchsregelung geschaffen, die aufgrund der Überwachung der verbrauchten Ladungsmenge und ggf. Einschränkung der Stellaktivitäten auch bei Reglern mit separaten Ladungsspeichern eine wirksame Regelung über einen langen Zeitraum gewährleistet.

### Bezugszeichenliste:

- 1: Regler
- 2: Stellantrieb
- 3: Regelung
- 4: Speichereinheit
- 5: Recheneinheit
- 6: logischer Kondensator
- 7: Ladungszähler

## Patentansprüche

1. Regelverfahren für elektrisch betriebene Stelleinrichtungen mit Ladungsspeicher, wie batteriebetriebene Temperaturregler mit motorgesteuerten Ventilen oder dgl., **dadurch gekennzeichnet, dass** der Stelleinrichtung auf der Basis der Ladekapazität des Ladungsspeichers eine pro Zeiteinheit, bspw. Tag, zur Verfügung stehende Ladungsmenge zugeordnet wird, dass der Ladungsverbrauch der Stelleinrichtung überwacht wird und dass die Stellbewegungen der Stelleinrichtung eingeschränkt werden, wenn die tatsächlich verbrauchte Ladungsmenge die für die Zeiteinheit zur Verfügung stehende Ladungsmenge übersteigt.

2. Regelverfahren nach Anspruch 1, **dadurch gekennzeichnet, dass** die Überwachung des Ladungsverbrauchs in einem logischen Kondensator durchgeführt wird, in dem die als Durchschnittsverbrauch vorgesehene Ladungsmenge einmal pro Zeiteinheit, bspw. einmal pro Tag, auf einen fortlaufenden Zähler aufaddiert und die tatsächlich in der Zeiteinheit verbrauchte Ladungsmenge von dem Zähler subtrahiert wird.

3. Regelverfahren nach Anspruch 1, **dadurch gekennzeichnet, dass** zur Überwachung des Ladungsverbrauchs die in einer Zeiteinheit tatsächlich verbrauchte Ladungsmenge von der pro Zeiteinheit zum Verbrauch vorgesehenen Ladungsmenge subtrahiert wird.

4. Regelverfahren nach einem der vorhergehenden Ansprüche, **dadurch gekennzeichnet, dass** die Einschränkung der Stellbewegungen durch eine Begrenzung des maximalen Stellweges der Stelleinrichung erreicht wird.

5. Regelverfahren nach einem der vorhergehenden Ansprüche, **dadurch gekennzeichnet, dass** die Einschränkung der Stellbewegungen durch eine Verkleinerung des von der Regelung nutzbaren Stellweges der Stelleinrichtung erreicht wird.

6. Regelverfahren nach einem der vorhergehenden Ansprüche, **dadurch gekennzeichnet, dass** die Einschränkung der Stellbewegungen durch eine Vergrößerung des Mindeststellweges, ab dem eine Stellbewegung durchgeführt wird, erreicht wird.

7. Regelverfahren nach einem der vorhergehenden Ansprüche, **dadurch gekennzeichnet, dass** die Einschränkung der Stellbewegungen durch eine Anpassung der Nachstellzeit der Regelung, der Regelverstärkung und/oder dergleichen Parameter erreicht wird.

8. Regelverfahren nach einem der vorhergehenden Ansprüche, **dadurch gekennzeichnet, dass** die Parameter zur Steuerung der Stellbewegung, wie maximaler Stellweg, Sollstellweg, Mindeststellweg, Nachstellzeit, Regelverstärkung und dgl., mit einem aus der zur Verfügung stehenden Ladungsmenge abgeleiteten Bewertungsfaktor gewichtet werden.

9. Verfahren nach Anspruch 2 und 8, **dadurch gekennzeichnet, dass** der Bewertungsfaktor in dem logischen Kondensator mit einer Berechnungsvorschrift aus dem Zählerstand gebildet wird.

10. Verfahren nach Anspruch 8 oder 9, **dadurch gekennzeichnet, dass** der Bewertungsfaktor zwischen 0 und 1 liegt.

11. Regler für elektrisch betriebene Stelleinrichtungen mit Ladungsspeicher, insbesondere zur Durchführung des Regelverfahrens nach einem der vorhergehenden Ansprüche, mit einem Stellantrieb (2), einer Regelung (3) zur Steuerung des Stellantriebs (2) und einem Ladungsspeicher, **gekennzeichnet durch** einen Ladungszähler (7) zur Überwachung der verbrauchten Ladungsmenge, eine Speichereinheit (4) zum Speichern des Werts der zur Verfügung stehenden Ladungsmenge, des Wertes der verbrauchten Ladungsmenge und ggf. eines Bewertungsfaktors sowie eine Recheneinheit (5) zur Bestimmung der für die Stellbewegungen des Stellantriebs (2) zur Verfügung stehenden Ladungsmenge und ggf. des Bewertungsfaktors.

12. Regler nach Anspruch 11, **dadurch gekennzeichnet, dass** die Speichereinheit (4) und die Recheneinheit (5) als logischer Kondensator (6) mit einem fortlaufenden Zähler zur Addition der pro Zeiteinheit zur Verfügung stehenden Ladung und zur Subtraktion der tatsächlich verbrauchten Ladung ausgebildet sind.

## Claims

1. A control method for electrically operated servo equipment with charge storage, such as battery-operated temperature controllers with motor-controlled valves or the like,
**characterised in that** associated with the servo equipment on the basis of the charge capacity of the charge storage is an amount of charge available per unit of time, e.g. a day,
**in that** the charge consumption of the servo equipment is monitored
and **in that** the regulating movements of the servo equipment are restricted when the actually consumed amount of charge exceeds the amount of charge available for the unit of time.

2. A control method according to Claim 1,
**characterised in that** the monitoring of the charge consumption is performed in a logic capacitor, in which the amount of charge provided as the average consumption is totted up once per unit of time, e.g. once per day, on a consecutive counter and the amount of charge actually consumed in the unit of time is subtracted from the counter.

3. A control method according to Claim 1,
**characterised in that** to monitor the charge consumption the amount of charge actually consumed in a unit of time is subtracted from the amount of charge provided for consumption per unit of time.

4. A control method according to one of the preceding Claims,
**characterised in that** the restriction of the regulating movements is achieved by limiting the maximum control displacement of the correcting displacement of the servo equipment.

5. A control method according to one of the preceding Claims,
**characterised in that** the restriction of the regulating movements is achieved by a reduction of the correcting displacement of the servo equipment that can be used by the closed-loop control.

6. A control method according to one of the preceding Claims,
**characterised in that** the restriction of the regulating movements is achieved by an enlargement of the minimum correcting displacement from which a regulating movement is performed.

7. A control method according to one of the preceding Claims,
**characterised in that** the restriction of the regulating movements is achieved by adapting the reset time of the closed-loop control, the control amplification and/or similar parameters.

8. A control method according to one of the preceding Claims,
**characterised in that** the parameters for controlling the regulating movement, such as maximum correcting displacement, set correcting displacement, minimum correcting displacement, reset time, control amplification and the like, are weighted with a weighting factor derived from the amount of available charge.

9. A method according to Claim 2 and 8,
**characterised in that** the weighting factor is formed in the logic capacitor with a computation instruction from the counter reading.

10. A method according to Claim 8 or 9,
**characterised in that** the weighting factor lies between 0 and 1.

11. A regulator for electrically operated servo equipment with charge storage, in particular for performing the control method according to one of the preceding Claims, comprising a servo drive (2), a closed-loop control (3) for controlling the servo drive (2) and a charge storage device,
**characterised by** a charge counter (7) for monitoring the amount of charge consumed, a storage unit (4) for storing the value of the amount of available charge, the value of the amount of charge consumed and, where appropriate, of a weighting factor, and also an arithmetic-logic unit (5) for determining the amount of charge available for the regulating movements of the servo drive (2) and, where appropriate, of the weighting factor.

12. A regulator according to Claim 11,
**characterised in that** the storage unit (4) and the arithmetic-logic unit (5) are constructed as a logic capacitor (6) with a consecutive counter for the addition of the charge available per unit of time and for the subtraction of the actually consumed charge.

## Revendications

1. Procédé de régulation pour un dispositif de réglage actionné électriquement avec un accumulateur de charge électrique, tel qu'un thermorégulateur à pile avec des valves commandées par moteur ou d'autres dispositifs semblables, **caractérisé en ce qu'**une quantité de charge électrique disponible par unité de temps, par exemple par jour, est attribuée au dispositif de réglage sur la base de la capacité de charge de l'accumulateur de charge électrique, **en ce que** la consommation de charge électrique du dispositif de réglage est contrôlée, et **en ce que** les mouvements de réglage du dispositif de réglage sont limités lorsque la quantité de charge électrique effectivement consommée dépasse la quantité de charge électrique disponible pour l'unité de temps.

2. Procédé de régulation selon la revendication 1, **caractérisé en ce que** le contrôle de la consommation de charge électrique est réalisé dans un condensateur logique dans lequel la quantité de charge électrique prévue comme consommation moyenne est ajoutée une fois par unité de temps, par exemple une fois par jour, dans un compteur en continu et la quantité de charge électrique effectivement consommée durant l'unité de temps est soustraite du compteur.

3. Procédé de régulation selon la revendication 1, **caractérisé en ce que** pour contrôler la consommation de charge électrique, la quantité de charge électrique effectivement consommée durant une unité de temps est soustraite de la quantité de charge électrique prévue pour la consommation par unité de temps.

4. Procédé selon l'une des revendications précédentes, **caractérisé en ce que** la limitation des mouvements de réglage est atteinte en limitant le parcours maximal de réglage du dispositif de réglage.

5. Procédé de régulation selon l'une des revendications précédentes, **caractérisé en ce qu'**une limitation des mouvements de réglage est atteinte en diminuant les parcours de réglages du dispositif de réglage utilisable par la régulation.

6. Procédé de régulation selon l'une des revendications précédentes, **caractérisé en ce que** la limitation des mouvements de réglage est atteinte en augmentant le parcours de réglage minimum à partir duquel un mouvement de réglage est réalisé.

7. Procédé de régulation selon l'une des revendications précédentes, **caractérisé en ce que** la limitation des mouvements de réglage est atteinte en adaptant le temps de réglage de la régulation, l'amplification de réglage et/ou des paramètres semblables.

8. Procédé de régulation selon l'une des revendications précédentes, **caractérisé en ce que** les paramètres pour commander les mouvements de réglage, tels que le parcours de réglage maximal, le parcours de réglage nominal, parcours de réglage minimal, le temps de réglage, l'amplification de réglage ou d'autres paramètres semblables, sont pondérés avec un facteur d'évaluation découlant de la quantité de charge électrique disponible.

9. Procédé selon l'une des revendications 2 à 8, **caractérisé en ce que** le facteur d'évaluation est formé dans le condensateur logique avec un règlement de calcul à partir de l'état du compteur.

10. Procédé selon la revendication 8 ou 9, **caractérisé en ce que** le facteur d'évaluation est compris entre 0 et 1.

11. Régulateur pour dispositifs de réglage actionné électriquement avec accumulateur de charge électrique, notamment pour la réalisation du procédé de régulation selon l'une des revendications précédentes, avec un mécanisme de commande (2), une régulation (3) pour commander le mécanisme de commande (2) et un accumulateur de charge électrique, **caractérisé par** un compteur de charge électrique (7) pour contrôler la quantité de charge électrique consommée, une unité de mémoire (4) pour enregistrer la valeur de la quantité de charge électrique disponible, la valeur de la quantité de charge électrique consommée et le cas échéant un coefficient d'évaluation ainsi qu'une unité de calcul (5) pour déterminer la quantité de charge électrique disponible pour les mouvements de réglage du mécanisme de commande (2) ainsi que le cas échéant le facteur d'évaluation.

12. Régulateur selon la revendication 11, **caractérisé en ce que** l'unité de mémoire (4) et l'unité de calcul (5) sont réalisées sous la forme d'un condensateur logiques (6) avec un compteur en continu pour additionner la charge électrique disponible par unité de temps et pour soustraire la charge électrique effectivement consommée.
